**Europäisches Patentamt**

**European Patent Office**

**Office européen des brevets**

(19)

(11) Veröffentlichungsnummer : **0 345 515 B1**

# (12) EUROPÄISCHE PATENTSCHRIFT

(45) Veröffentlichungstag der Patentschrift :
**16.08.95 Patentblatt 95/33**

(51) Int. Cl.$^6$ : **H04L 27/22**

(21) Anmeldenummer : **89109128.2**

(22) Anmeldetag : **20.05.89**

(54) **Verfahren zur Trägerrückgewinnung.**

(30) Priorität : **07.06.88 DE 3819380**

(43) Veröffentlichungstag der Anmeldung :
**13.12.89 Patentblatt 89/50**

(45) Bekanntmachung des Hinweises auf die
Patenterteilung :
**16.08.95 Patentblatt 95/33**

(84) Benannte Vertragsstaaten :
**AT BE CH DE ES FR GB GR IT LI LU NL SE**

(56) Entgegenhaltungen :
**PATENT ABSTRACTS OF JAPAN vol. 10, no.
386 (E-467)(2443) 24 Dezember 1986, & JP-A-61
177054**

(73) Patentinhaber : **ROBERT BOSCH GMBH
Postfach 30 02 20
D-70442 Stuttgart (DE)**

(72) Erfinder : **Ketterling, Hans-Peter, Dipl.-Ing.
Mannfred-von-Richthofen-Strasse 11
D-1000 Berlin 42 (DE)**

## Beschreibung

Die Erfindung geht von einem Verfahren nach dem Oberbegriff des Anspruchs 1 aus.

## Stand der Technik

Bei der Übertragung von digitalen Signalen über Lichtwellenleiter-, Kabel- oder Funkstrecken werden vielfach Verfahren mit kohärenter Demodulation angewendet. Als Beispiele seien die Verfahren BPSK (Binary Phase Shift Keying), QPSK (Quadrature Phase Shift Keying) und OQPSK (Offset Quadrature Phase Shift Keying) benannt. Zur Rückgewinnung des HF-Trägers werden üblicherweise normale PLL (Phased Locked Loop)-Schaltungen oder Costas-Loop-Schaltungen oder Squaring-Loop-Schaltungen verwendet. Nachteilig ist bei diesen Schleifenschaltungen, daß bei verrauschten Empfangssignalen ein störender Phasenschlupf (cycle slip) auftreten kann. Zum Beispiel ist bei der Verwendung einer Squaring-Loop-Schaltung in Verbindung mit einem Multiplikator als Phasendiskriminator dieser Schlupf gerade $1/2 \cdot 2\pi = \pi$ bzw. 180°, was bei dem BPSK-Verfahren gerade zu einer Invertierung der digitalen Signale führt. Abhilfe kann durch ensprechende Kodierverfahren erreicht werden, zum Beispiel durch Differenzkodierung bei dem BPSK- oder OQPSK-Verfahren. Damit ist jedoch der Nachteil verbunden) daß sich die Fehlerwahrscheinlichkeit infolge des Auftretens von Doppelfehlern erhöht.

Aus den Patent Abstracts of Japan, Vol. 10, No. 386 (E-467) (2443) vom 24. Dezember 1986 (JP-A-61177054) ist eine Empfangsschaltung für phasenmodulierte Signale bekannt, bei der aus der empfangenen Signalfrequenz eine neue Frequenz gebildet wird, die durch Multiplikation erhalten wird und bei der diese Frequenz als Referenzfrequenz einer PLL-Schaltung zugeführt wird. Durch Division der Ausgangsfrequenz des spannungsgesteuerten Oszillators wird nunmehr die Signalfrequenz erhalten. Eventuell vorhandene Phasenstörungen bleiben bei dieser Schaltungsanordnung erhalten.

## Aufgabe

Der Erfindung liegt die Aufgabe zugrunde, ein Verfahren der gattungsgemäßen Art derart weiterzubilden, daß die Auswirkungen des Phasenschlupfes auf ein Minimum reduziert werden.

## Lösung und erzielbare Vorteile

Diese Aufgabe wird bei einem gattungsgemäßen Verfahren durch die kennzeichnenden Merkmale des Anspruchs 1 gelöst.

Die mit der Erfindung erzielbaren Vorteile bestehen insbesondere darin, daß der bei der Trägerrückgewinnung gegebenenfalls auftretende Phasenschlupf sich kaum noch negativ auf die Fehlerrate bei schlechtem Störabstand auswirkt.

Ein bevorzugtes Anwendungsgebiet für das erfindungsgemäße Verfahren sind digitale Funktelefone.

## Beschreibung von Ausführungsbeispielen

Ausführungsbeispiele der Erfindung sind in der Zeichnung anhand mehrerer Figuren dargestellt und werden im folgenden näher beschrieben. Es zeigen

Fig. 1     ein Prinzipschaltbild einer PLL-Schaltung für das erfindungsgemäße Verfahren,

Fig. 2     ein Blockschaltbild einer erfindungsgemäßen Vorrichtung zur Trägerrückgewinnung und

Fig. 3     ein Blockschaltbild einer erfindungsgemäßen Vorrichtung zur Trägerrückgewinnung bei einem MPSK-Verfahren.

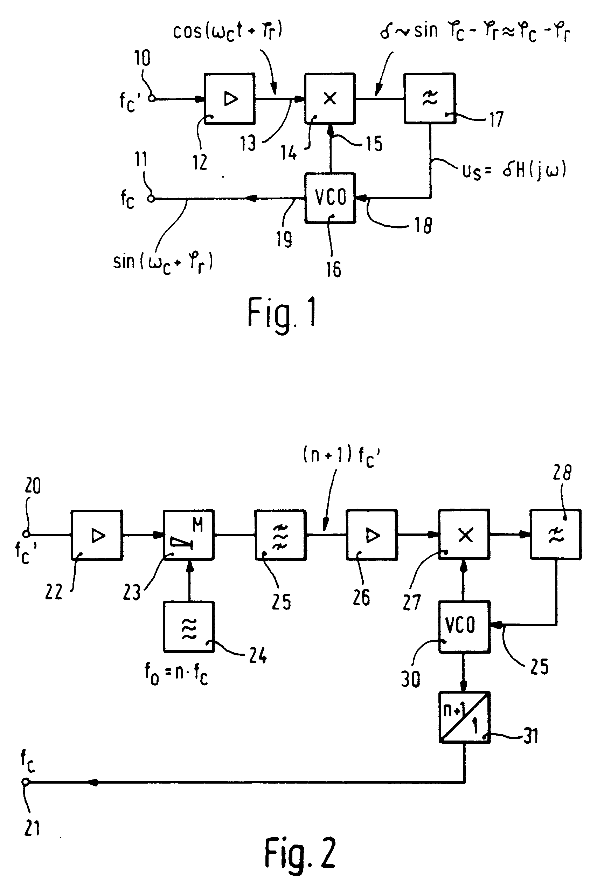

In dem Prinzipschaltbild nach Fig. 1 bezeichnet 10 einen Eingang und 11 einen Ausgang einer für das erfindungsgemäße Verfahren bestimmten PLL-Schaltung. An den Eingang 10 schließt sich ein Verstärker 12 an, dessen Ausgang mit einem ersten Eingang 13 eines Diskriminators bzw. Multiplizierers 14 verbunden ist. Ein zweiter Eingang 15 des Multiplizierers 14 steht mit einem Ausgang eines spannungsgesteuerten Oszillators 16 in Verbindung. Ein Ausgang des Multiplizierers 14 ist über ein Tiefpaßfilter 17 mit einem Steuereingang 18 des spannungsgesteuerten Oszillators 16 verbunden, dessen weiterer Ausgang 19 dem Ausgang 11 der PLL-Schaltung entspricht.

Die Wirkungsweise der vorstehend beschriebenen PLL-Schaltung ist folgende.

Das am Eingang 10 der PLL-Schaltung liegende verrauschte HF-Signal folge der Beziehung

$$u'(t) = U_o' \cos [\omega_c t + \phi_r(t)],$$

wobei $\omega_c$ die Trägerfrequenz und $\phi_r(t)$ die verrauschte Nullphase sind.

2

Das von dem spannungsgesteuerten Oszillator 16 abgegebene Signal sei

$$u(t) = U_o \cdot \sin(\omega_c t + \phi_c),$$

wobei $\phi_c$ die (weitgehend) rauschbefreite Phase der Signalspannung des spannungsgesteuerten Oszillators 16 ist. Durch Multiplikation der an dem ersten Eingang 13 und an dem zweiten Eingang 15 des Multiplizierers 14 liegenden Signalspannungen entsteht eine Spannung, die der Beziehung

$$u_\delta = U_o \cdot \cos[\omega_c t + \phi_r(t)] \cdot U_o \sin(\omega_c t + \phi_c)$$

folgt.

Durch das Tiefpaßfilter 17 ergibt sich aus der vorgenannten Signalspannung $u_\delta$ ein gefiltertes Fehlersignal

$$u_s = u_\delta \cdot H(j\omega)$$

$$= \frac{U_o''}{2} \sin[\phi_c - \phi_r(t)] \cdot H(j\omega),$$

wobei H der Übertragungsfunktion des Tiefpaßfilters 17 entspricht. Die Nutzmodulation ist bei den vorstehenden Erläuterungen nicht berücksichtigt worden.

In dem Blockschaltbild nach Fig. 2, das gegenüber dem Blockschaltbild nach Fig. 1 hinsichtlich der Stufen 22 bis 25 und 31 erweitert worden ist, bezeichnet 20 einen Eingang und 21 einen Ausgang einer PLL-Schaltung zum Reduzieren des Phasenschlupfes.

An den Eingang 20 schließt sich ein Verstärker 22 und an diesen ein erster Eingang eines Mischers 23 an, dessen zweiter Eingang mit einem HF-Oszillator 24 verbunden ist. Auf den Mischer 23 folgt ein Bandpaßfilter 25 und auf dieses ein weiterer Verstärker 26, dessen Ausgang mit einem ersten Eingang eines Multiplizierers (Diskriminators) 27 verbunden ist. Der Ausgang des Multiplizierers steht über ein Tiefpaßfilter 28 mit einem Steuereingang 29 eines spannungsgesteuerten Oszillators 30 in Verbindung, dessen einer Ausgang mit einem zweiten Eingang des Multiplizierers 27 verbunden ist. Ein zweiter Ausgang des spannungsgesteuerten Oszillators ist über einen Frequenzteiler 31 mit dem Ausgang 21 der Vorrichtung verbunden.

Die Wirkungsweise der Schaltungsanordnung nach Fig. 2 ist folgende.

Die Frequenz $f_c'$ des am Eingang 20 liegenden verrauschten und mit einem Verstärker 22 verstärkten HF-Signals wird in dem Mischer 23 mit einer Oszillatorfrequenz $f_o = n \cdot f_c$ moduliert, wobei n eine ganze Zahl ist, die sehr viel größer als 1 ist. Mit dem sich an den Mischer 23 anschließenden Bandpaßfilter 25 wird die Frequenz $(n + 1) f_c$ ausgesiebt. Die Ausgangsspannung des Bandpaßfiltes 25 wird im Anschluß an eine Verstärkung mit dem weiteren Verstärker 26 dem ersten Eingang des Multiplizierers 27 zugeführt, an dessen zweiten Eingang die Ausgangsspannung des spannungsgesteuerten Oszillators 30 liegt. Die von dem Multiplizierer abgegebene Spannung passiert das Tiefpaßfilter 28 und steuert den spannungsgesteuerten Oszillator nach. Die nachgeführte Oszillatorfrequenz wird mit dem Frequenzteiler 31 durch $(n + 1)$ geteilt, so daß an dem Ausgang 21 der Schaltungsanordnung wieder eine Signalfrequenz $f_c$ zur Verfügung steht. Tritt in der PLL-Schaltung ein Phasenschlupf auf, zum Beispiel von $2\pi$, so wirkt sich dieser auf die Frequenz $f_c$ am Ausgang 21 nur im Verhältnis von $\frac{2\pi}{(n + 1)}$ aus. Wird n hinreichend groß gewählt, dann ist die durch den Phasenschlupf auftretende Degradation vernachlässigbar.

Der Phasenschlupf kann je nach Diskriminatortyp $2\pi$ oder $k \cdot \pi$ betragen, wobei in der Regel k = 2 oder 4 ist.

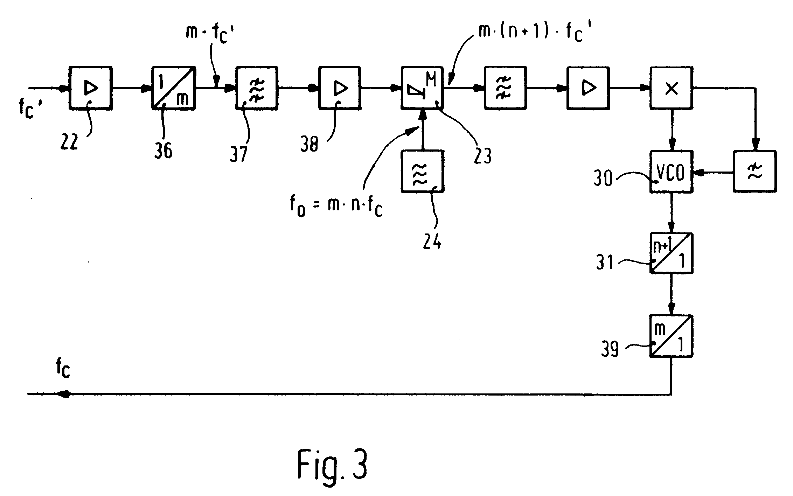

In dem Blockschaltbild nach Fig. 3, das für das MPSK-Verfahren (M-ARY-Verfahren) bestimmt ist, sind gegenüber dem Blockschaltbild nach Fig. 2 folgende Ergänzungen vorgenommen worden. Zwischen dem ersten Verstärker 22 und dem Mischer 23 liegt eine Reihenschaltung aus einem Frequenzvervielfacher 36, einem Bandpaßfilter 37 und einem weiteren Verstärker 38. Zwischen dem spannungsgesteuerten Oszillator 30 und dem Ausgang der Schaltungsanordnung befindet sich ein zusätzlicher Frequenzteiler 39. Der Frequenzvervielfacher 36 multipliziert die Eingangsfrequenz $f_c'$ mit m; der zu dem Mischer 23 gehörende Oszillator 24 hat eine Oszillatorfrequenz $f_o = m(n + 1) f_c$; der zusätzliche Frequenzteiler 39 teilt die ihm zugeführte Frequenz durch m.

Der Faktor bzw. der Quotient m entspricht der Zahl der beim MPSK-Verfahren möglichen Phasenzustände. m ist eine ganze Zahl, die größer als 1 ist. Durch die vorstehend aufgeführten zusätzlichen Maßnahmen ergibt sich die Möglichkeit, einen modulationsfreien Träger zu erzeugen. Durch die zusätzliche Addition von $m(n + 1) f_c$ mit dem Mischer 23 und durch die nachfolgende Teilung durch $(n + 1)$ in dem Frequenzteiler 31 reduziert sich der Phasenschlupf. Die Teilung durch m in dem Frequenzteiler 39 rekonstruiert die originale Trägerfrequenz $f_c$. Die beiden Frequenzteiler 31 und 39 können dabei zu einem einzigen Frequenzteiler zusammengefaßt werden, der das Teilerverhältnis $m(n + 1)$ hat.

**Patentansprüche**

1. Verfahren zur Trägerrückgewinnung bei der kohärenten oder quasikohärenten Demodulation von digital übertragenen Daten, dadurch gekennzeichnet, daß aus der empfangenen Signalfrequenz ($f_c'$) durch Modulation mit einer Signalfrequenz ($n \cdot f_c$) eine Frequenz $(n + 1) \cdot f_c$ gebildet wird, wobei n eine ganze Zahl ist, die größer als 1 ist, daß die durch die Modulation erhaltene Frequenz $(n + 1) \cdot f_c$ als Referenzfrequenz einer PLL-Schaltung zugeführt wird, deren spannungsgesteuerter Oszillator die Frequenz $(n + 1) \cdot f_c$ hat und daß aus der Oszillatorfrequenz durch Frequenzteilung mit dem Quotienten $(n + 1)$ eine weitgehend phasenschlupffreie Signalfrequenz ($f_c$) erhalten wird.

2. Verfahren nach Anspruch 1, dadurch gekennzeichnet, daß bei nach dem MPSK-Verfahren übertragenen Daten die empfangene Signalfrequenz ($f_c'$) vor der Modulation zusätzlich mit einem Faktor (m) multipliziert wird, wobei m eine ganze Zahl ist, die größer als 1 ist, und daß nach der Frequenzteilung mit dem Quotienten $(n + 1)$ eine weitere Frequenzteilung mit einem dem Faktor (m) entsprechenden Quotienten (m) stattfindet.

3. Verfahren nach Anspruch 2, dadurch gekennzeichnet, daß beide Frequenzteiler (31, 39) zu einem einzigen Frequenzteiler mit dem Teilerverhältnis m $(n + 1)$ zusammengefaßt werden.

**Claims**

1. Method for carrier recovery in the coherent or quasi-coherent demodulation of digitally transmitted data, characterized in that, from the received signal frequency ($f_c'$), by means of modulation with a signal frequency ($n \times f_c$), a frequency $(n + 1) \times f_c$ is formed, n being an integer which is larger than 1, in that the frequency $(n + 1) \times f_c$ obtained by means of the modulation is fed as reference frequency to a PLL [phase-locked loop] circuit, whose voltage-controlled oscillator has the frequency $(n + 1) \times f_c$, and in that a signal frequency ($f_c$) which is largely free of cycle slip is obtained from the oscillator frequency by means of frequency division by the quotient $(n + 1)$.

2. Method according to Claim 1, characterized in that in the case of data transmitted in accordance with the MPSK [multiple phase shift keying] method, the received signal frequency ($f_c'$) is additionally multiplied before the modulation by a factor (m), m being an integer which is larger than 1, and in that after the frequency division by the quotient $(n + 1)$, a further frequency division by a quotient (m) corresponding to the factor (m) takes place.

3. Method according to Claim 2, characterized in that both frequency dividers (31, 39) are combined into a single frequency divider having the divider ratio m $(n + 1)$.

**Revendications**

1. Procédé de récupération de porteuse pour une démodulation cohérente ou quasi-cohérente de données à transmission numérique, caractérisé en ce qu'avec la fréquence du signal reçu ($f_{c'}$) on forme par modulation avec une fréquence de signal ($n \cdot f_c$) une fréquence $(n + 1) \cdot f_{c'}$ n étant un nombre entier supérieur à un et la fréquence n + 1) ; $f_c$ obtenue par modulation est appliquée comme fréquence de référence à un circuit à verrouillage de phase PLL dont l'oscillateur commandé en tension travaille à la fréquence (n + 1) . $f_c$ et à partir de la fréquence de l'oscillateur, par division de fréquence par le quotient $(n + 1)$, on obtient une fréquence de signal ($f_c$) très largement libérée du glissement de phase.

2. Procédé selon la revendication 1, caractérisé en ce que pour des données transmises selon le procédé MPSK, on multiplie la fréquence de signal reçue ($f'_c$) avant la modulation par un coefficient (m) qui est un nombre entier supérieur à un et après la division de fréquence par le quotient $(n + 1)$, on effectue une nouvelle division de fréquence par le quotient (m) correspondant au facteur (m).

3. Procédé selon la revendication 2, caractérisé en ce que les diviseurs de fréquence (31, 39) sont réunis en un seul diviseur de fréquence travaillant avec le rapport de division m $(n + 1)$.

$$\cos(\omega_c t + \varphi_r)$$

$$\delta \sim \sin \varphi_c - \varphi_r \approx \varphi_c - \varphi_r$$

$$u_s = \delta H(j\omega)$$

$$\sin(\omega_c + \varphi_r)$$

# Fig. 1

$$(n+1) f_c'$$

$$f_0 = n \cdot f_c$$

# Fig. 2

Fig. 3

EP 0 345 515 B1